# FASCICULE DE BREVET EUROPEEN

(11) **EP 4 357 250 B1**
(45) Date de publication et mention de la délivrance du brevet: **30.04.2025**
(21) Numéro de dépôt: 23204000.6
(22) Date de dépôt: 17.10.2023
(51) Int. Cl.: B64D 37/30, B64D 37/32, B65D 90/22, G01M 3/04

(54) **INSTALLATION COMPRENANT UN DISPOSITIF DE REGULATION D' UNE CONCENTRATION EN DIHYDROGENE**
ANLAGE MIT EINER VORRICHTUNG ZUR REGELUNG EINER KONZENTRATION VON WASSERSTOFF
PLANT COMPRISING A DEVICE FOR REGULATING A DIHYDROGEN CONCENTRATION

(30) Priorité: 18.10.2022 FR 2210763
(43) Date de publication de la demande: 24.04.2024
(73) Titulaire: Airbus SAS, 31700 Blagnac (FR); Airbus Operations SAS, 31060 Toulouse (FR)
(72) Inventeur: RASPATI, Olivier, 31060 TOULOUSE (FR); LANDOLT, Jonathan, 31700 BLAGNAC (FR)
(74) Mandataire: Cabinet Le Guen Maillet

(56) Documents cités:
- GB-A- 2 603 944
- US-A- 2 757 362
- US-A- 3 203 651
- US-A1- 2003 044 741
- US-A1- 2020 148 380
- US-A1- 2021 003 254
- US-A1- 2022 307 428
- US-B2- 8 821 797

## Description

### DOMAINE TECHNIQUE

L'invention concerne le domaine des installations contenant un réservoir de dihydrogène et/ou un circuit de dihydrogène. Ces installations correspondent par exemple à des véhicules, en particulier des aéronefs, des véhicules automobiles, des véhicules ferroviaires ou des bateaux, ou encore des installations fixes au sol.

### ETAT DE LA TECHNIQUE ANTERIEURE

D'une manière connue, le dihydrogène peut constituer une alternative au pétrole dans la propulsion des véhicules, en particulier des aéronefs. En effet, d'une manière particulièrement avantageuse, la réaction d'oxydation du dihydrogène produit de l'eau, ce qui fait du dihydrogène une énergie plus propre que le pétrole. Le dihydrogène peut notamment être utilisé pour alimenter un ensemble de piles à combustible alimentant électriquement un ou plusieurs moteurs électriques de propulsion du véhicule, tel qu'un aéronef, ou encore comme carburant, tel que pour un turbopropulseur d'aéronef.

Dans un véhicule comprenant un réservoir de dihydrogène ou un circuit de distribution de dihydrogène, il est souhaitable d'éviter que du dihydrogène puisse s'accumuler dans des endroits non désirés, en particulier dans des espaces fermés ou semi-fermés, par exemple sous un carénage d'un aéronef.

Ainsi, il est souhaitable de fournir une solution qui permette de contrôler la concentration en dihydrogène dans une installation comprenant un réservoir de dihydrogène et/ ou un circuit de dihydrogène.

Il existe des capteurs permettant de mesurer une concentration en dihydrogène. Toutefois, ces capteurs ne permettent de mesurer la concentration en dihydrogène que de façon très locale, à leur emplacement, et de plus ils utilisent une membrane chimique dont le temps de réaction est relativement long. D'autre part, étant donné qu'il s'agit de capteurs, ils permettent de mesurer localement la concentration en dihydrogène, mais ils ne permettent pas de contrôler la concentration en dihydrogène en la faisant diminuer. US 3203651, US 2022/307428, US 2021/003254, US 2757362 divulguent des systèmes de carburant appartenant à l'état de la technique.

### EXPOSE DE L'INVENTION

A cet effet, selon un premier aspect, il est proposé une installation contenant un réservoir de dihydrogène et/ou un circuit de dihydrogène. L'installation comprend un dispositif de régulation d'une concentration en dihydrogène qui comprend au moins une paire de conducteurs électriques ainsi qu'au moins un contrôleur et qui est situé à l'extérieur du réservoir et/ou du circuit et, chaque paire de conducteurs électriques comprenant un premier conducteur électrique et un deuxième conducteur électrique, le premier conducteur électrique et le deuxième conducteur électrique de chaque paire étant espacés d'une distance prédéterminée, et l'au moins un contrôleur étant configuré pour commander de façon répétitive l'application d'une différence prédéterminée de tension électrique entre le premier conducteur électrique et le deuxième conducteur électrique de façon à ce que, d'après ladite distance prédéterminée, un arc électrique de puissance contrôlée se forme entre le premier conducteur électrique et le deuxième conducteur électrique.

Ainsi, étant donné que le dispositif de régulation d'une concentration en dihydrogène produit des arcs électriques de façon répétitive entre les premier et deuxième conducteurs électriques, si du dihydrogène est présent dans l'air ambiant, ces arcs électriques permettent de brûler du dihydrogène et donc d'en réduire la concentration. Cela évite notamment que du dihydrogène puisse s'accumuler dans des endroits non désirés de l'installation. Cela permet de réduire ou de retarder l'accroissement de la concentration en dihydrogène dans l'air. Le fait que les arcs électriques soient produits avec une puissance contrôlée de faible valeur permet une intégration sans impact sur les éléments environnants, tels que des pièces mécaniques ou d'autres systèmes.

Selon une disposition particulière, le dispositif comprend plusieurs entretoises isolantes, espacées, interposées entre le premier conducteur électrique et le deuxième conducteur électrique de chaque paire, les entretoises isolantes étant en forme de billes ou d'ovoïdes.

Selon une disposition particulière, le dispositif comprend une première série constituée des premiers conducteurs électriques orientés selon une première direction et comprend une deuxième série constituée des deuxièmes conducteurs électriques orientés selon une deuxième direction sécante de la première direction, de sorte que la première série et la deuxième série forment des mailles.

Selon une disposition particulière, le dispositif comprend une première série de premiers conducteurs électriques orientés selon une première direction et comprend une deuxième série de deuxièmes conducteurs électriques orientés selon une deuxième direction parallèle à la première direction.

Selon une disposition particulière, le dispositif est configuré de telle façon que l'au moins un contrôleur commande l'application de la différence prédéterminée de tension électrique entre les premiers conducteurs électriques et les deuxièmes conducteurs électriques de façon simultanée pour les différentes paires de conducteurs électriques.

Selon une disposition particulière, le dispositif est configuré de telle façon que, chaque paire de conducteurs électriques étant alimentée en électricité indépendamment des autres paires de conducteurs électriques, l'au moins un contrôleur commande l'application de la différence prédéterminée de tension électrique entre les premiers conducteurs électriques et les deuxièmes conducteurs électriques de façon décalée temporellement pour au moins deux paires de conducteurs électriques.

Selon une disposition particulière, l'au moins un contrôleur est configuré pour commander l'application de la différence prédéterminée de tension électrique entre les premiers conducteurs électriques et les deuxièmes conducteurs électriques de sorte qu'au plus une seule paire de conducteurs électriques soit alimentée à chaque instant.

Selon une disposition particulière, l'au moins un contrôleur est relié à au moins un capteur optique et l'au moins un contrôleur est configuré pour recevoir un signal issu de l'au moins un capteur optique, pour analyser ce signal de façon à détecter la présence éventuelle d'une raie lumineuse correspondant à la combustion de dihydrogène et pour transmettre un signal d'alerte à un système de signalisation de l'installation en cas de détection d'une telle raie lumineuse.

Selon une disposition particulière, l'au moins un capteur optique est relié à au moins une fibre optique.

Selon une disposition particulière, l'au moins une fibre optique est parallèle au premier conducteur électrique ou au deuxième conducteur électrique.

Selon une disposition particulière, l'au moins un contrôleur est relié à au moins un capteur thermique et l'au moins un contrôleur est configuré pour recevoir un signal issu de l'au moins un capteur thermique, pour analyser ce signal de façon à détecter une éventuelle élévation de température due à la combustion de dihydrogène et pour transmettre un signal d'alerte à un système de signalisation de l'installation en cas de détection d'une telle élévation de température.

Selon une disposition particulière, l'au moins une fibre optique est utilisée à la fois pour l'au moins un capteur optique et pour l'au moins un capteur thermique.

Selon une disposition particulière, l'installation comprend en outre un dispositif complémentaire de régulation du dihydrogène utilisant un matériau catalyseur d'une réaction d'oxydation du dihydrogène avec l'air ambiant.

Selon une disposition particulière, le matériau catalyseur est appliqué sur au moins l'un parmi un conducteur électrique, une fibre optique ou une entretoise dudit dispositif.

Selon une disposition particulière, l'au moins un contrôleur est configuré pour fonctionner selon deux modes de fonctionnement :
- un premier mode, dit de surveillance, dans lequel l'au moins un contrôleur surveille la présence de dihydrogène dans le dispositif, tant que la présence de dihydrogène n'est pas détectée, et dans lequel l'au moins un contrôleur commande l'application de la différence prédéterminée de tension électrique entre le premier conducteur électrique et le deuxième conducteur électrique d'une paire de conducteurs selon un premier intervalle de temps entre deux applications successives de la différence prédéterminée de tension électrique ; et
- un deuxième mode de fonctionnement, lorsque la présence de dihydrogène dans le dispositif est détectée, tel que lorsque l'au moins un contrôleur détecte une concentration en dihydrogène au moins dans une zone du dispositif, ladite zone correspondant à cette paire de conducteurs, le contrôleur commande l'application de la différence prédéterminée de tension électrique entre le premier conducteur électrique et le deuxième conducteur électrique de la paire de conducteurs électrique selon un deuxième intervalle de temps entre deux applications successives de la différence prédéterminée de tension électrique, le deuxième intervalle de temps étant inférieur au premier intervalle de temps.

Selon une disposition particulière, le dispositif est conformé sous la forme :
- d'un revêtement appliqué sur une surface d'un volume de l'installation dans lequel du dihydrogène est susceptible de s'accumuler ; ou
- d'un manchon disposé autour d'une zone de raccordement d'éléments de distribution ou de stockage de dihydrogène.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un aéronef comprenant un dispositif de régulation d'une concentration en dihydrogène ;
[Fig. 2] illustre schématiquement un agencement de paires de conducteurs électriques du dispositif de régulation d'une concentration en dihydrogène ;
[Fig. 3] illustre schématiquement un autre agencement de paires de conducteurs électriques du dispositif de régulation d'une concentration en dihydrogène ;
[Fig. 4] illustre schématiquement encore un autre agencement de paires de conducteurs électriques du dispositif de régulation d'une concentration en dihydrogène ; et
[Fig. 5] illustre schématiquement un agencement matériel d'un contrôleur du dispositif de régulation d'une concentration en dihydrogène.

### EXPOSE DETAILLE DE MODES DE REALISATION

### Installation

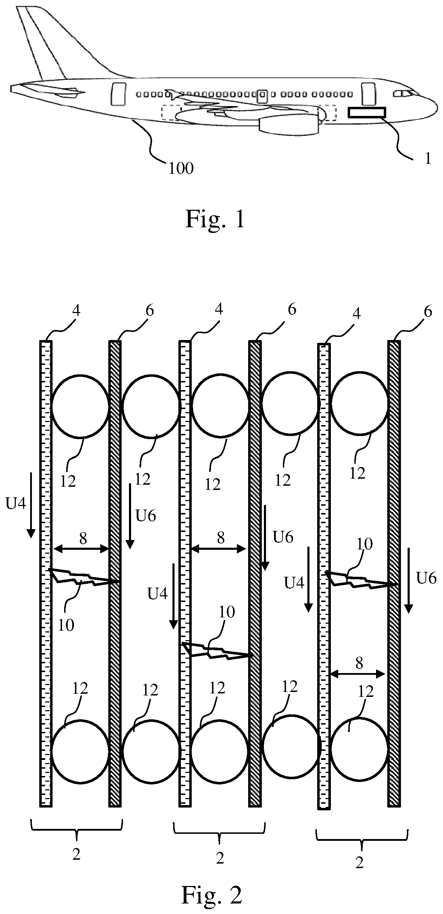

En référence à la Fig. 1, il est proposé une installation correspondant à un aéronef 100 contenant un réservoir de dihydrogène et/ou un circuit de dihydrogène et comprenant un dispositif 1 de régulation d'une concentration en dihydrogène.

Il convient de noter que le dispositif 1 de régulation d'une concentration en dihydrogène n'est pas spécifique à un aéronef et peut aussi s'appliquer à tout autre type d'installation comprenant un réservoir de dihydrogène ou un circuit de distribution de dihydrogène sans sortir du cadre de l'invention.

Le dispositif 1 est situé dans l'aéronef 100 à l'extérieur du réservoir de dihydrogène et du circuit de dihydrogène, dans des endroits où il est désiré que le dihydrogène ne puisse pas s'accumuler au-delà d'une certaine concentration.

Par exemple, l'aéronef 100 contient un réservoir de dihydrogène et un circuit de dihydrogène pour alimenter une ou plusieurs piles à combustible alimentant un ou plusieurs moteurs électriques propulsant l'aéronef 100. Selon un autre exemple, l'aéronef 100 contient un réservoir de dihydrogène et un circuit de dihydrogène pour alimenter en dihydrogène un turbopropulseur fonctionnant par combustion de dihydrogène.

### Dispositif de régulation d'une concentration en dihydrogène

En référence aux Figs. 2, 3 et 4, le dispositif 1 comprend notamment au moins une paire 2 de conducteurs électriques comprenant un premier conducteur électrique 4 et un deuxième conducteur électrique 6. Les conducteurs électriques 4 et 6 peuvent être des fils métalliques (tels que des fils de cuivre) ou des bandes métalliques.

Le dispositif 1 comprend en outre un contrôleur 200. Le dispositif 1 peut comporter plusieurs contrôleurs agissant de manière coordonnée pour implémenter les comportements décrits ici en relation avec le contrôleur 200.

Le contrôleur 200 est configuré de telle façon qu'en fonctionnement, il commande de façon répétitive l'application d'une différence prédéterminée de tension électrique entre le premier conducteur électrique 4 et le deuxième conducteur électrique 6. Lors de l'application de ladite différence prédéterminée de tension électrique, le premier conducteur électrique 4 est alimenté avec une première tension électrique U4 et le deuxième conducteur électrique 6 est alimenté avec une deuxième tension électrique U6, les tensions U4 et U6 étant telles que la différence entre U4 et U6 correspond à ladite différence prédéterminée de tension électrique.

De façon particulière, l'une des tensions électriques U4 et U6, par exemple U6, peut correspondre à une tension de référence de 0 volts. La valeur de l'autre tension électrique, par exemple U4, correspond alors à ladite différence prédéterminée de tension électrique.

Le premier conducteur électrique 4 et le deuxième conducteur électrique 6, de chaque paire 2 de conducteurs électriques, sont espacés d'une distance 8 prédéfinie. Les valeurs de la distance prédéfinie 8 et de la différence prédéterminée de tension électrique sont choisies de sorte qu'un arc électrique 10 se forme entre les deux conducteurs électriques 4 et 6 lorsque la différence prédéterminée de tension électrique est appliquée entre le premier conducteur électrique 4 et le deuxième conducteur électrique 6.

Pour mémoire, un arc électrique 10 est créé par ionisation d'un milieu isolant (ici de l'air) lorsque deux surfaces conductrices (ici, la paire 2 de conducteurs électriques 4 et 6) entre lesquelles il existe une différence de tension électrique sont suffisamment proches (ici, les conducteurs électriques sont espacés d'une distance 8 prédéfinie).

Le contrôleur 200 commande l'application de la différence prédéterminée de tension électrique entre le premier conducteur électrique 4 et le deuxième conducteur électrique 6 de telle façon que l'arc électrique 10 se produise avec une puissance contrôlée, au vu de l'espacement entre les deux conducteurs électriques 4 et 6 défini par ladite distance 8 prédéfinie.

Pour cela, le contrôleur 200 commande par exemple une valeur maximale de courant électrique susceptible de circuler dans le premier conducteur électrique 4 et le deuxième conducteur électrique 6. La puissance de l'arc électrique 10, contrôlée par le contrôleur 200, est choisie de telle façon que l'énergie électrique dissipée dans l'arc électrique 10 soit supérieure d'une marge prédéterminée à l'énergie d'activation du dihydrogène (environ 17 milli-Joules). Cela garantit que l'arc électrique 10 permet de brûler le dihydrogène présent entre le premier conducteur électrique 4 et le deuxième conducteur électrique 6. En outre, la puissance de l'arc électrique 10, contrôlée par le contrôleur 200, est choisie de telle façon que l'énergie électrique dissipée dans l'arc électrique 10 soit inférieure à une valeur maximale prédéterminée, par exemple choisie dans un intervalle compris entre 2 fois et 10 fois la valeur de l'énergie d'activation du dihydrogène, de préférence compris entre 2 fois et 5 fois la valeur de l'énergie d'activation du dihydrogène.

Dans le dispositif 1, lorsque l'air contient du dihydrogène issu notamment d'une fuite du réservoir de dihydrogène ou d'une canalisation de distribution de dihydrogène, l'arc électrique 10 permet de brûler le dihydrogène présent entre le premier conducteur électrique 4 et le deuxième conducteur électrique 6, pour réduire la concentration en dihydrogène et former de l'eau. Cela évite notamment que du dihydrogène puisse s'accumuler dans des endroits non désirés de l'installation. Cela permet de réduire ou de retarder l'accroissement de la concentration en dihydrogène dans l'air. Le fait que les arcs électriques soient produits avec une puissance contrôlée de faible valeur permet une intégration sans impacts sur les éléments environnants, tels que des pièces mécaniques ou d'autres systèmes.

De façon préférée, le contrôleur 200 commande l'application de la différence prédéterminée de tension électrique entre le premier conducteur électrique 4 et le deuxième conducteur électrique 6 selon un intervalle de temps, entre deux applications successives de la différence prédéterminée de tension électrique, compris entre 1 milliseconde et 10 secondes, de préférence entre 1 milliseconde et 2 secondes. Le reste du temps, aucune différence de tension n'est appliquée entre le premier conducteur électrique 4 et le deuxième conducteur électrique 6.

### Agencement des conducteurs électriques en parallèle

Selon un mode de réalisation illustré sur la Fig. 2, le premier conducteur électrique 4 et le deuxième conducteur électrique 6 sont disposés côte à côte selon des directions parallèles.

Selon ce mode de réalisation, les conducteurs électriques 4 et 6 sont disposés de sorte à avoir une seule nappe (un seul plan) de conducteurs électriques 4 et 6 dans laquelle sont alternés successivement, de manière espacée, un premier conducteur électrique 4 et un deuxième conducteur électrique 6. La distance 8 entre les premiers conducteurs électriques 4 et les deuxièmes conducteurs électriques 6 peut être garantie par des entretoises 12 isolantes espacées les unes des autres. Typiquement, ces entretoises 12 isolantes peuvent avoir une forme de billes, ou d'ovoïdes, en matériau isolant, qui sont positionnés entre les premiers conducteurs électriques 4 et les deuxièmes conducteurs électriques 6.

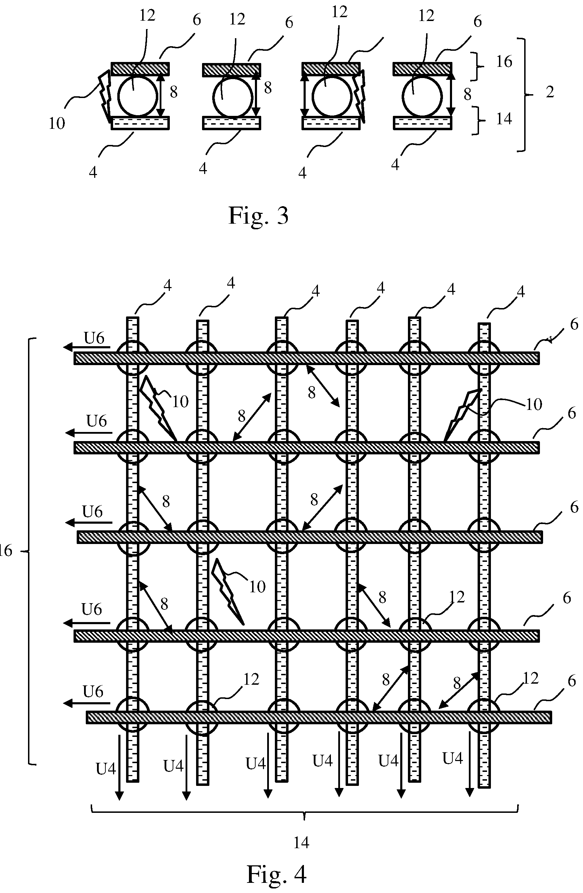

La Fig. 3 présente une variante dans laquelle les conducteurs électriques 4 et 6 sont aussi disposés selon des directions parallèles. Selon cette variante, les conducteurs électriques 4 et 6 sont disposés en deux nappes superposées (i.e., dans deux plans parallèles). Plus précisément, une première série 14 constituée des premiers conducteurs électriques 4 forme une première nappe. Les premiers conducteurs électriques 4 de la première série 14 sont disposés les uns à côté des autres et sont orientés dans la même direction.

Une deuxième série 16 constituée des deuxièmes conducteurs électriques 6 forme une deuxième nappe superposée à la première nappe. Les deuxièmes conducteurs électriques 6 électriques de la deuxième série 16 sont disposés les uns à côté des autres et sont orientés dans la même direction que les premiers conducteurs électriques 4 de la première série 14.

La distance 8 entre les premiers conducteurs électriques 4 et les deuxièmes conducteurs électriques 6 peut être garantie par des entretoises isolantes. Typiquement, ces entretoises 12 isolantes peuvent avoir une forme de billes, ou d'ovoïdes, en matériau isolant, qui sont positionnés entre les premiers conducteurs électriques 4 et les deuxièmes conducteurs électriques 6.

Ainsi, en d'autres termes, selon ce mode de réalisation le dispositif 1 comprend deux nappes superposées.

### Agencement des conducteurs électriques en mailles

Selon un mode de réalisation représenté à la Fig. 4, le dispositif 1 comprend une première série 14 constituée des premiers conducteurs électriques 4 dans un premier plan et orientés selon une première direction et comprend une deuxième série 16 constituée des deuxièmes conducteurs électriques 6 dans un deuxième plan parallèle au premier plan et orientés selon une deuxième direction différente de la première direction, de sorte que la première série 14 et la deuxième série 16 forment des mailles (en vue perpendiculaire aux premier et deuxième plans). Ainsi, en d'autres termes, selon ce mode de réalisation, les conducteurs électriques de la première série 14 et de la deuxième série 16 sont orientés selon deux directions sécantes. Chaque série 14 et 16 forme respectivement une nappe. Le dispositif 1 comprend deux nappes empilées formant des mailles.

Selon une disposition particulière, la deuxième direction est orthogonale à la première direction.

En outre, d'une manière particulièrement avantageuse, la distance 8 entre les premiers conducteurs électriques 4 et les deuxièmes conducteurs électriques 6 (c'est-à-dire entre les premier et deuxième plans) peut être garantie par des entretoises 12 isolantes. Typiquement, ces entretoises 12 isolantes peuvent avoir une forme de billes, ou d'ovoïdes, en matériau isolant qui sont positionnés entre les premiers conducteurs électriques 4 et les deuxièmes conducteurs électriques 6. Selon ce mode de réalisation, les entretoises 12 isolantes peuvent être positionnées entre les premiers conducteurs électriques 4 et les deuxièmes conducteurs électriques 6.

### Pilotage de l'alimentation électrique des conducteurs électriques

Selon un mode de réalisation, l'ensemble des paires 2 de conducteurs électriques sont alimentées simultanément en électricité, respectivement avec la première tension électrique U4 pour les premiers conducteurs électriques 4 et la deuxième tension électrique U6 pour les deuxièmes conducteurs électriques 6. Ainsi, selon ce mode de réalisation, les premiers conducteurs électriques 4 et les deuxièmes conducteurs électriques 6 sont tous alimentés simultanément en électricité. En d'autres termes, selon ce mode de réalisation, la première tension électrique U4 est appliquée en même temps à tous les premiers conducteurs électriques 4 du dispositif 1 et la deuxième tension électrique U6 est appliquée en même temps à tous les deuxièmes conducteurs électriques 6 du dispositif 1.

Selon un autre mode de réalisation, chaque paire 2 de conducteurs électriques 4 et 6 est alimentée en électricité indépendamment des autres paires 2 de conducteurs électriques, l'alimentation électrique d'au moins deux paires 2 de conducteurs électriques étant décalée temporellement. Ainsi, selon ce mode de réalisation, il est possible d'alimenter les paires 2 de conducteurs électriques 4 et 6 de façon discriminée. En d'autres termes, ce mode de réalisation permet de ne pas alimenter toutes les paires 2 de conducteurs électriques 4 et 6 en même temps, et ainsi réduire la consommation énergétique du dispositif 1.

Selon un autre mode de réalisation, l'alimentation électrique de chaque paire 2 de conducteurs électriques 4 et 6 est décalée temporellement par rapport à l'alimentation électrique des autres paires 2 de conducteurs électriques, de sorte qu'au plus une seule paire 2 de conducteurs électriques 4 et 6 soit électriquement alimentée à chaque instant. En d'autres termes, selon ce mode de réalisation les paires 2 de conducteurs électriques 4 et 6 sont mises sous tension une à une.

### Contrôleur

Le contrôleur 200 comprend de la circuiterie électronique pour piloter l'alimentation électrique des paires 2 de conducteurs électriques 4 et 6.

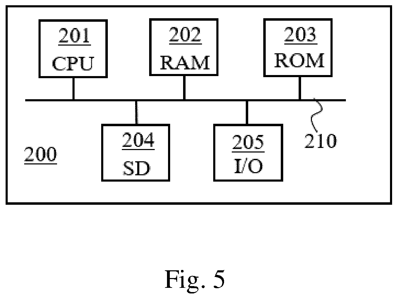

Tel que schématisé sur la Fig. 5, le contrôleur 200 peut comporter, reliés par un bus de communication 210 : un processeur 201 ; une mémoire vive 202 ; une mémoire morte 203, par exemple de type ROM (« Read Only Memory » en langue anglo-saxonne) ou EEPROM (« Electrically-Erasable Programmable Read Only Memory » en langue anglo-saxonne) et un gestionnaire d'interfaces d'entrées-sorties 205. D'une manière avantageuse, le gestionnaire d'interfaces d'entrées-sorties 205 permet de piloter une ou plusieurs alimentations électriques permettant de délivrer de manière contrôlée la première tension électrique U4 et la deuxième tension électrique U6.

Le processeur 201 est capable d'exécuter des instructions chargées dans la mémoire vive 202 à partir de la mémoire morte 203, d'une mémoire externe, d'un support de stockage (tel qu'une carte SD), ou d'un réseau de communication. Lorsque le système informatique 200 est mis sous tension, le processeur 201 est capable de lire de la mémoire vive 202 des instructions et de les exécuter. Ces instructions forment un programme d'ordinateur causant le contrôle, par le processeur 201, de l'alimentation électrique des conducteurs électriques 4 et 6.

Tout ou partie du contrôle de l'alimentation électrique des conducteurs électriques 4 et 6 peut ainsi être implémenté sous forme logicielle par exécution d'un ensemble d'instructions par une machine programmable, par exemple un processeur de type DSP (« Digital Signal Processor » en langue anglo-saxonne) ou un microcontrôleur, ou être implémenté sous forme matérielle par une machine ou un composant dédié, par exemple un composant FPGA (« Field Programmable Gate Array » en langue anglo-saxonne ou ASIC (« Application-Specific Integrated Circuit » en langue anglo-saxonne). D'une manière générale, le contrôleur 200 comporte de la circuiterie électronique adaptée et configurée pour implémenter, sous forme logicielle et/ou matérielle, le contrôle de l'alimentation électrique des conducteurs électriques 4 et 6.

### Détection d'arcs

D'une manière particulièrement avantageuse, le dispositif 1 peut intégrer des moyens de détection d'un arc électrique 10. Typiquement ces moyens peuvent être reliés au contrôleur 200 pour faire remonter une information de détection d'un arc électrique 10. De plus, selon une disposition particulière, cette information peut aussi être transmise à des moyens d'information de l'aéronef 100, tels que l'avionique de l'aéronef 100, pour indiquer la présence d'une concentration en dihydrogène supérieure ou égale à un seuil prédéterminé, à un endroit de l'aéronef 100 où le dispositif 1 est positionné.

Il est précisé que les moyens de détection d'arc électrique peuvent en outre permettre de contrôler le bon fonctionnement du dispositif 1 en vérifiant la bonne génération d'arcs électriques 10.

Selon une disposition particulière, le contrôleur 200 comprend de la circuiterie électronique pour mesurer des courants électriques (i.e. intensité) circulant dans le premier conducteur électrique 4 et dans le deuxième conducteur électrique 6, pour détecter un arc électrique 10 reliant le premier conducteur électrique et le deuxième conducteur électrique d'une même paire 2. Les mesures effectuées sont analysées par le contrôleur 200 pour déterminer la présence d'un arc électrique. Ainsi, lorsque le contrôleur 200 ne détermine pas la présence d'un arc électrique alors que le contrôleur 200 a commandé l'application de la différence prédéterminée de tension électrique entre le premier conducteur électrique 4 et le deuxième conducteur électrique 6, le contrôleur 200 détermine ainsi une défaillance du dispositif 1 et le contrôleur 200 signale cette défaillance à un système de signalisation de l'installation, par exemple à un système de signalisation dans le cockpit de l'aéronef.

Selon une autre disposition particulière, le contrôleur 200 est relié à un capteur optique, pour détecter optiquement un arc électrique entre le premier conducteur électrique 4 et le deuxième conducteur électrique 6. Dans un mode de réalisation particulier, le capteur optique est relié à une fibre optique longeant l'un des conducteurs électriques de la paire 2 de conducteurs électriques. La fibre optique peut capter un signal lumineux émis par l'arc électrique et transmettre ce signal lumineux jusqu'au capteur optique relié au contrôleur 200. Le contrôleur 200 est configuré pour analyser un signal transmis par le capteur optique de façon à détecter la présence éventuelle d'une raie lumineuse (du signal lumineux) correspondant à la combustion de dihydrogène. En effet, en brûlant, le dihydrogène émet un rayonnement lumineux ayant une longueur d'onde spécifique (656.3nm). Si le signal transmis par le capteur optique correspond à cette longueur d'onde, le contrôleur 200 détecte ainsi la présence de dihydrogène dans le dispositif 1. L'amplitude de la raie lumineuse est fonction de la concentration en dihydrogène. S'il détecte la présence de dihydrogène à une concentration supérieure à une concentration prédéterminée, le contrôleur 200 transmet un signal d'alerte à un système de signalisation de l'installation, par exemple de façon à signaler une alerte dans le cockpit de l'aéronef 100.

Selon une autre disposition particulière, le contrôleur 200 est relié à un capteur thermique, pour détecter thermiquement un arc électrique 10 entre le premier conducteur électrique 4 et le deuxième conducteur électrique 6. De façon particulière, le capteur thermique comprend une fibre optique. Cette fibre optique peut alors être utilisée à la fois pour le capteur thermique et pour le capteur optique selon la disposition particulière précédente.

Dans les modes de réalisation dans lesquels les premier et deuxième conducteurs électriques sont agencés en parallèle, le dispositif 1 permet une localisation longitudinale par le contrôleur 200 d'une concentration en dihydrogène. Dans les modes de réalisation dans lesquels les premier et deuxième conducteurs électriques sont agencés en mailles, le dispositif 1 permet une localisation bidimensionnelle par le contrôleur 200 d'une concentration en dihydrogène.

De façon avantageuse, le contrôleur 200 est configuré pour fonctionner selon deux modes de fonctionnement :
- un premier mode, dit de surveillance, dans lequel le contrôleur 200 surveille la présence de dihydrogène dans le dispositif 1, tant que la présence de dihydrogène n'est pas détectée. Dans le premier mode, le contrôleur 200 commande l'application de la différence prédéterminée de tension électrique entre le premier conducteur électrique 4 et le deuxième conducteur électrique 6 d'une paire 2 de conducteurs électriques selon un premier intervalle de temps entre deux applications successives de la différence prédéterminée de tension électrique ; et
- un deuxième mode de fonctionnement, lorsque la présence de dihydrogène dans le dispositif 1 est détectée, tel que lorsque le contrôleur 200 détecte une concentration en dihydrogène au moins dans une zone du dispositif 1, ladite zone correspondant à cette paire 2 de conducteurs électriques, le contrôleur 200 commande l'application de la différence prédéterminée de tension électrique entre le premier conducteur électrique 4 et le deuxième conducteur électrique 6 de la paire 2 de conducteurs électriques selon un deuxième intervalle de temps entre deux applications successives de la différence prédéterminée de tension électrique, le deuxième intervalle de temps étant inférieur au premier intervalle de temps. Ce deuxième mode de fonctionnement permet d'accroître la fréquence des arcs électriques, et par conséquent, le volume de dihydrogène brûlé, lorsqu'une concentration en dihydrogène est détectée. Il en résulte une meilleure efficacité du dispositif 1.

De façon particulière, dans le mode de réalisation dans lequel l'alimentation électrique des paires 2 de conducteurs électriques est décalée temporellement, lorsque le contrôleur 200 détecte une concentration en dihydrogène dans une zone particulière du dispositif 1, le contrôleur 200 n'applique le deuxième intervalle de temps que pour les paires 2 de conducteurs électriques correspondant à cette zone particulière. Ainsi, la fréquence des arcs électriques n'est augmentée que dans la zone particulière dans laquelle la concentration en dihydrogène est détectée. Cela permet d'accroître davantage cette fréquence et donc d'améliorer encore davantage l'efficacité du dispositif 1.

### Combinaison avec un organe de neutralisation par catalyse

Selon une disposition particulière, l'aéronef 100 peut aussi comprendre un dispositif complémentaire de régulation du dihydrogène utilisant un matériau catalyseur d'une réaction d'oxydation du dihydrogène avec l'air ambiant pour oxyder le dihydrogène émanant du réservoir et/ou du circuit. Combiner le dispositif 1 et le dispositif complémentaire permet une meilleure régulation de la concentration en dihydrogène.

Par exemple, le matériau catalyseur comprend de l'alumine et/ou de l'oxyde de cérium et/ou un platinoïde. Selon une disposition particulièrement avantageuse, le platinoïde choisi est du platine et/ou du palladium. Selon un mode de réalisation, le platinoïde choisi est un dioxyde de platine, aussi connu sous le nom de catalyseur d'Adams.

Selon une disposition particulière, le dispositif complémentaire comprend une pluralité de fils ou d'entretoises recouverts du matériau catalyseur. Il est précisé que par fils, il est entendu des fils, des bandes ou des cordons. Les fils peuvent être des fils électriquement conducteurs ou des fibres optiques. De façon avantageuse, le dispositif complémentaire comprend un organe de détection, sous forme de circuiterie électronique et/ou optoélectronique connectée à chaque fil, afin de détecter une réaction d'oxydation du dihydrogène par le matériau oxydant et transmettre (par exemple, au pilote) une information de détection de dihydrogène. L'organe de détection peut être relié, intégré ou partiellement intégré au contrôleur 200. Si les fils sont des conducteurs électriques, alors l'organe de détection comprend des capteurs d'impédance (typiquement des bobines) positionnés sur chaque fil. Lorsque du dihydrogène rencontre le matériau catalyseur à la surface d'un fil, la réaction d'oxydation du dihydrogène produit de la chaleur qui est transmise dans le fil électriquement conducteur, ce qui en modifie l'impédance. Ainsi, les capteurs d'impédance permettent de détecter une variation d'impédance sur un ou plusieurs fils, et donc d'en déduire la présence de dihydrogène au contact de ces fils. Et si les fils sont des fibres optiques, alors l'organe de détection comprend des capteurs de température positionnés sur chaque fil. Lorsque du dihydrogène rencontre le matériau catalyseur à la surface d'un fil en fibre optique, la réaction d'oxydation du dihydrogène produit de la chaleur qui est transmise à la fibre optique, ce qui en modifie la température. Ainsi, les capteurs de température permettent de détecter une variation de température d'une ou plusieurs fibres optiques, et donc d'en déduire la présence de dihydrogène au contact de ces fibres optiques.

### Fixation

Selon une disposition particulièrement avantageuse, les entretoises 12 isolantes peuvent maintenir les conducteurs électriques 4 et 6 reliés les uns aux autres.

Selon une autre disposition, les conducteurs électriques 4 et 6 peuvent être reliés par une nappe ou un lien en matériau électriquement isolant. Il est précisé que, selon ce mode de réalisation, les conducteurs électriques 4 et 6 sont maintenus espacés pour permettre un éventuel passage du dihydrogène.

Selon un mode de réalisation, les conducteurs électriques 4 et 6, ainsi que des liens en matériau électriquement isolant, peuvent être entrelacés pour former un tissage. Il est précisé que selon ce mode de réalisation, les conducteurs électriques 4 et 6 sont maintenus espacés pour permettre un éventuel passage du dihydrogène.

Selon une autre disposition, les conducteurs électriques 4 et 6 peuvent être collés sur une surface, comme par exemple une surface externe de réservoir de dihydrogène ou d'une canalisation de circuit de dihydrogène, tout en étant maintenus espacés. La surface peut aussi correspondre à une surface d'un espace fermé ou semi-fermé, par exemple de l'aéronef 100, dans lequel il convient d'éviter une accumulation de dihydrogène.

Selon une autre disposition, le dispositif 1 est conformé sous la forme d'un manchon disposé autour d'une zone de raccordement d'éléments de distribution de dihydrogène, par exemple autour d'un raccord de tuyauteries de distribution de dihydrogène.

## Revendications

1. Installation contenant un réservoir de dihydrogène et/ou un circuit de dihydrogène, l'installation comprenant également un dispositif (1) de régulation d'une concentration en dihydrogène qui comprend au moins une paire (2) de conducteurs électriques (4, 6) ainsi qu'au moins un contrôleur (200) et qui est situé à l'extérieur du réservoir et/ou du circuit et, chaque paire (2) de conducteurs électriques (4, 6) comprenant un premier conducteur électrique (4) et un deuxième conducteur électrique (6), le premier conducteur électrique (4) et le deuxième conducteur électrique (6) de chaque paire (2) étant espacés d'une distance prédéterminée, et l'au moins un contrôleur (200) étant configuré pour commander de façon répétitive l'application d'une différence prédéterminée de tension électrique entre le premier conducteur électrique (4) et le deuxième conducteur électrique (6) de façon à ce que, d'après ladite distance prédéterminée, un arc électrique de puissance contrôlée se forme entre le premier conducteur électrique (4) et le deuxième conducteur électrique (6).

2. Installation (100) selon la revendication précédente, dans laquelle le dispositif (1) comprend plusieurs entretoises (12) isolantes, espacées, interposées entre le premier conducteur électrique (4) et le deuxième conducteur électrique (6) de chaque paire (2), les entretoises (12) isolantes étant en forme de billes ou d'ovoïdes.

3. Installation (100) selon l'une des revendications précédentes, dans laquelle le dispositif (1) comprend une première série (14) constituée des premiers conducteurs électriques (4) orientés selon une première direction et comprend une deuxième série (16) constituée des deuxièmes conducteurs électriques (6) orientés selon une deuxième direction sécante de la première direction, de sorte que la première série (14) et la deuxième série (16) forment des mailles.

4. Installation (100) selon l'une quelconque des revendications 1 ou 2, dans laquelle le dispositif (1) comprend une première série (14) de premiers conducteurs électriques (4) orientés selon une première direction et comprend une deuxième série (16) de deuxièmes conducteurs électriques (6) orientés selon une deuxième direction parallèle à la première direction.

5. Installation (100) selon l'une quelconque des revendications précédentes, dans laquelle le dispositif (1) est configuré de telle façon que l'au moins un contrôleur (200) commande l'application de la différence prédéterminée de tension électrique entre les premiers conducteurs électriques (4) et les deuxièmes conducteurs électriques (6) de façon simultanée pour les différentes paires (2) de conducteurs électriques (4, 6).

6. Installation (100) selon l'une quelconque des revendications 1 à 4, dans laquelle le dispositif (1) est configuré de telle façon que, chaque paire (2) de conducteurs électriques (4, 6) étant alimentée en électricité indépendamment des autres paires (2) de conducteurs électriques (4, 6), l'au moins un contrôleur (200) commande l'application de la différence prédéterminée de tension électrique entre les premiers conducteurs électriques (4) et les deuxièmes conducteurs électriques (6) de façon décalée temporellement pour au moins deux paires (2) de conducteurs électriques (4, 6).

7. Installation (100) selon la revendication 6, dans laquelle l'au moins un contrôleur (200) est configuré pour commander l'application de la différence prédéterminée de tension électrique entre les premiers conducteurs électriques (4) et les deuxièmes conducteurs électriques (6) de sorte qu'au plus une seule paire (2) de conducteurs électriques (4, 6) soit alimentée à chaque instant.

8. Installation (100) selon l'une quelconque des revendications précédentes, dans laquelle l'au moins un contrôleur (200) est relié à au moins un capteur optique et l'au moins un contrôleur (200) est configuré pour recevoir un signal issu de l'au moins un capteur optique, pour analyser ce signal de façon à détecter la présence éventuelle d'une raie lumineuse correspondant à la combustion de dihydrogène et pour transmettre un signal d'alerte à un système de signalisation de l'installation en cas de détection d'une telle raie lumineuse.

9. Installation (100) selon la revendication 8, dans laquelle l'au moins un capteur optique est relié à au moins une fibre optique.

10. Installation (100) selon la revendication 9, dans laquelle l'au moins une fibre optique est parallèle au premier conducteur électrique (4) ou au deuxième conducteur électrique (6).

11. Installation (100) selon l'une quelconque des revendications précédentes, dans laquelle l'au moins un contrôleur (200) est relié à au moins un capteur thermique et l'au moins un contrôleur (200) est configuré pour recevoir un signal issu de l'au moins un capteur thermique, pour analyser ce signal de façon à détecter une éventuelle élévation de température due à la combustion de dihydrogène et pour transmettre un signal d'alerte à un système de signalisation de l'installation en cas de détection d'une telle élévation de température.

12. Installation (100) selon la revendication 11 combinée avec l'une des revendications 9 ou 10, dans laquelle l'au moins une fibre optique est utilisée à la fois pour l'au moins un capteur optique et pour l'au moins un capteur thermique.

13. Installation (100) selon l'une quelconque des revendications précédentes, comprenant en outre un dispositif complémentaire de régulation du dihydrogène utilisant un matériau catalyseur d'une réaction d'oxydation du dihydrogène avec l'air ambiant.

14. Installation (100) selon la revendication précédente, dans laquelle le matériau catalyseur est appliqué sur au moins l'un parmi un conducteur électrique, une fibre optique ou une entretoise du dispositif (1) de régulation de la concentration en dihydrogène.

15. Installation (100) selon l'une quelconque des revendications précédentes, dans laquelle l'au moins un contrôleur (200) est configuré pour fonctionner selon deux modes de fonctionnement :
- un premier mode, dit de surveillance, dans lequel l'au moins un contrôleur (200) surveille la présence de dihydrogène dans le dispositif (1), tant que la présence de dihydrogène n'est pas détectée, et dans lequel l'au moins un contrôleur (200) commande l'application de la différence prédéterminée de tension électrique entre le premier conducteur électrique (4) et le deuxième conducteur électrique (6) d'une paire (2) de conducteurs selon un premier intervalle de temps entre deux applications successives de la différence prédéterminée de tension électrique ; et
- un deuxième mode de fonctionnement, lorsque la présence de dihydrogène dans le dispositif (1) est détectée, tel que lorsque l'au moins un contrôleur (200) détecte une concentration en dihydrogène au moins dans une zone du dispositif (1), ladite zone correspondant à cette paire de conducteurs, le contrôleur (200) commande l'application de la différence prédéterminée de tension électrique entre le premier conducteur électrique (4) et le deuxième conducteur électrique (6) de la paire (2) de conducteurs électrique selon un deuxième intervalle de temps entre deux applications successives de la différence prédéterminée de tension électrique, le deuxième intervalle de temps étant inférieur au premier intervalle de temps.

## Patentansprüche

1. Anlage, die einen Diwasserstofftank und/oder einen Diwasserstoffkreislauf beinhaltet, wobei die Anlage auch eine Vorrichtung (1) zur Regelung einer Diwasserstoffkonzentration umfasst, die mindestens ein Paar (2) von elektrischen Leitern (4, 6) sowie mindestens eine Steuerung (200) umfasst und die außerhalb des Tanks und/oder des Kreislaufs gelegen ist, und wobei, wenn jedes Paar (2) von elektrischen Leitern (4, 6) einen ersten elektrischen Leiter (4) und einen zweiten elektrischen Leiter (6) umfasst, der erste elektrische Leiter (4) und der zweite elektrische Leiter (6) jedes Paars (2) um einen bestimmten Abstand beabstandet sind, und wobei die mindestens eine Steuerung (200) dazu ausgestaltet ist, das Anlegen einer vorbestimmten Differenz einer elektrischen Spannung zwischen dem ersten elektrischen Leiter (4) und dem zweiten elektrischen Leiter (6) wiederholt zu steuern, so dass sich, gemäß dem vorbestimmten Abstand, ein Lichtbogen mit gesteuerter Leistung zwischen dem ersten elektrischen Leiter (4) und dem zweiten elektrischen Leiter (6) bildet.

2. Anlage (100) nach dem vorhergehenden Anspruch, wobei die Vorrichtung (1) mehrere beabstandete isolierende Distanzstücke (12) umfasst, die zwischen dem ersten elektrischen Leiter (4) und dem zweiten elektrischen Leiter (6) jedes Paars (2) angeordnet sind, wobei die isolierenden Distanzstücke (12) kugel- oder eiförmig sind.

3. Anlage (100) nach einem der vorhergehenden Ansprüche, wobei die Vorrichtung (1) eine erste Reihe (14) umfasst, die aus den ersten elektrischen Leitern (4) besteht, die entlang einer ersten Richtung ausgerichtet sind, und eine zweite Reihe (16) umfasst, die aus den zweiten elektrischen Leitern (6) besteht, die entlang einer zweiten Richtung ausgerichtet sind, welche die erste Richtung schneidet, so dass die erste Reihe (14) und die zweite Reihe (16) Maschen bilden.

4. Anlage (100) nach einem der Ansprüche 1 oder 2, wobei die Vorrichtung (1) eine erste Reihe (14) aus ersten elektrischen Leitern (4) umfasst, die entlang einer ersten Richtung ausgerichtet sind, und eine zweite Reihe (16) aus zweiten elektrischen Leitern (6) umfasst, die entlang einer zweiten Richtung ausgerichtet sind, die parallel zu der ersten Richtung ist.

5. Anlage (100) nach einem der vorhergehenden Ansprüche, wobei die Vorrichtung (1) derart ausgestaltet ist, dass die mindestens eine Steuerung (200) das Anlegen der vorbestimmten Differenz einer elektrischen Spannung zwischen den ersten elektrischen Leitern (4) und den zweiten elektrischen Leitern (6) für die verschiedenen Paare (2) von elektrischen Leitern (4, 6) gleichzeitig steuert.

6. Anlage (100) nach einem der Ansprüche 1 bis 4, wobei die Vorrichtung (1) derart ausgestaltet ist, dass, wenn jedes Paar (2) von elektrischen Leitern (4, 6) unabhängig von den anderen Paaren (2) von elektrischen Leitern (4, 6) mit Strom versorgt wird, die mindestens eine Steuerung (200) das Anlegen der vorbestimmten Differenz einer elektrischen Spannung zwischen den ersten elektrischen Leitern (4) und den zweiten elektrischen Leitern (6) für mindestens zwei Paare (2) von elektrischen Leitern (4, 6) zeitlich versetzt steuert.

7. Anlage (100) nach Anspruch 6, wobei die mindestens eine Steuerung (200) dazu ausgestaltet ist, das Anlegen der vorbestimmten Differenz einer elektrischen Spannung zwischen den ersten elektrischen Leitern (4) und den zweiten elektrischen Leitern (6) so zu steuern, dass höchstens ein einziges Paar (2) von elektrischen Leitern (4, 6) zu jedem Zeitpunkt versorgt wird.

8. Anlage (100) nach einem der vorhergehenden Ansprüche, wobei die mindestens eine Steuerung (200) mit mindestens einem optischen Sensor verbunden ist und die mindestens eine Steuerung (200) dazu ausgestaltet ist, ein aus dem mindestens einen optischen Sensor hervorgegangenes Signal zu empfangen, um dieses Signal so zu analysieren, dass das etwaige Vorkommen einer Lichtlinie detektiert wird, die der Verbrennung von Diwasserstoff entspricht, und um im Fall der Detektion einer solchen Lichtlinie ein Warnsignal an ein Signalisierungssystem der Anlage zu übertragen.

9. Anlage (100) nach Anspruch 8, wobei der mindestens eine optische Sensor mit mindestens einer optischen Faser verbunden ist.

10. Anlage (100) nach Anspruch 9, wobei die mindestens eine optische Faser parallel zu dem ersten elektrischen Leiter (4) oder zu dem zweiten elektrischen Leiter (6) ist.

11. Anlage (100) nach einem der vorhergehenden Ansprüche, wobei die mindestens eine Steuerung (200) mit mindestens einem thermischen Sensor verbunden ist und die mindestens eine Steuerung (200) dazu ausgestaltet ist, ein aus dem mindestens einen thermischen Sensor hervorgegangenes Signal zu empfangen, um dieses Signal so zu analysieren, dass ein etwaiger Temperaturanstieg detektiert wird, der durch die Verbrennung von Diwasserstoff bedingt ist, und um im Fall der Detektion eines solchen Temperaturanstiegs ein Warnsignal an ein Signalisierungssystem der Anlage zu übertragen.

12. Anlage (100) nach Anspruch 11 in Verbindung mit einem der Ansprüche 9 oder 10, wobei die mindestens eine optische Faser sowohl für den mindestens einen optischen Sensor als auch für den mindestens einen thermischen Sensor verwendet wird.

13. Anlage (100) nach einem der vorhergehenden Ansprüche, umfassend ferner eine ergänzende Vorrichtung zur Regelung des Diwasserstoffs, die ein eine Reaktion zur Oxidation des Diwasserstoffs mit der Umgebungsluft katalysierendes Material verwendet.

14. Anlage (100) nach dem vorhergehenden Anspruch, wobei das katalysierende Material auf mindestens eines von einem elektrischen Leiter, einer optischen Faser oder einem Distanzstück der Vorrichtung (1) zur Regelung der Diwasserstoffkonzentration appliziert wird.

15. Anlage (100) nach einem der vorhergehenden Ansprüche, wobei die mindestens eine Steuerung (200) dazu ausgestaltet ist, gemäß zwei Betriebsmodi betrieben zu werden:
- einem ersten Modus, Überwachungsmodus genannt, in dem die mindestens eine Steuerung (200) das Vorkommen von Diwasserstoff in der Vorrichtung (1) überwacht, solange das Vorkommen von Diwasserstoff nicht detektiert wird, und in dem die mindestens eine Steuerung (200) das Anlegen der vorbestimmten Differenz einer elektrischen Spannung zwischen dem ersten elektrischen Leiter (4) und dem zweiten elektrischen Leiter (6) eines Paars (2) von Leitern gemäß einem ersten Zeitintervall zwischen zwei aufeinander folgenden Anlegungen der vorbestimmten Differenz einer elektrischen Spannung steuert; und
- einem zweiten Betriebsmodus, wenn das Vorkommen von Diwasserstoff in der Vorrichtung (1) detektiert wird, so dass, wenn die mindestens eine Steuerung (200) eine Diwasserstoffkonzentration mindestens in einem Bereich der Vorrichtung (1) detektiert, wobei der Bereich diesem Paar von Leitern entspricht, die Steuerung (200) das Anlegen der vorbestimmten Differenz einer elektrischen Spannung zwischen dem ersten elektrischen Leiter (4) und dem zweiten elektrischen Leiter (6) des Paars (2) von elektrischen Leitern gemäß einem zweiten Zeitintervall zwischen zwei aufeinander folgenden Anlegungen der vorbestimmten Differenz einer elektrischen Spannung steuert, wobei das zweite Zeitintervall kürzer als das erste Zeitintervall ist.

## Claims

1. Apparatus containing a dihydrogen tank and/or a dihydrogen circuit, the apparatus also comprising a device (1) for regulating a concentration of dihydrogen which comprises at least one pair (2) of electrical conductors (4, 6) as well as at least one controller (200) and which is located outside the tank and/or the circuit and, each pair (2) of electrical conductors (4, 6) comprising a first electrical conductor (4) and a second electrical conductor (6), the first electrical conductor (4) and the second electrical conductor (6) of each pair (2) being spaced apart by a predetermined distance, and the at least one controller (200) being configured to repeatedly command the application of a predetermined voltage difference between the first electrical conductor (4) and the second electrical conductor (6) so that, based on said predetermined distance, an electric arc of controlled power is formed between the first electrical conductor (4) and the second electrical conductor (6).

2. Apparatus (100) according to the preceding claim, wherein the device (1) comprises several spaced-apart insulating spacers (12) interposed between the first electrical conductor (4) and the second electrical conductor (6) of each pair (2), the insulating spacers (12) being in the form of balls or of ovoids.

3. Apparatus (100) according to one of the preceding claims, wherein the device (1) comprises a first series (14) composed of the first electrical conductors (4) orientated in a first direction and comprises a second series (16) composed of the second electrical conductors (6) orientated in a second direction which intersects the first direction, so that the first series (14) and the second series (16) form cells.

4. Apparatus (100) according to either one of Claims 1 and 2, wherein the device (1) comprises a first series (14) of first electrical conductors (4) orientated in a first direction and comprises a second series (16) of second electrical conductors (6) orientated in a second direction which is parallel to the first direction.

5. Apparatus (100) according to any one of the preceding claims, wherein the device (1) is configured so that the at least one controller (200) commands the application of the predetermined voltage difference between the first electrical conductors (4) and the second electrical conductors (6) simultaneously for the various pairs (2) of electrical conductors (4, 6).

6. Apparatus (100) according to any one of Claims 1 to 4, wherein the device (1) is configured so that, each pair (2) of electrical conductors (4, 6) being supplied with electricity independently of the other pairs (2) of electrical conductors (4, 6), the at least one controller (200) commands the application of the predetermined voltage difference between the first electrical conductors (4) and the second electrical conductors (6) with a time lag for at least two pairs (2) of electrical conductors (4, 6).

7. Apparatus (100) according to Claim 6, wherein the at least one controller (200) is configured to command the application of the predetermined voltage difference between the first electrical conductors (4) and the second electrical conductors (6) so that at most a single pair (2) of electrical conductors (4, 6) is supplied with power at each instant.

8. Apparatus (100) according to any one of the preceding claims, wherein the at least one controller (200) is connected to at least one optical sensor and the at least one controller (200) is configured to receive a signal originating from the at least one optical sensor, to analyse this signal so as to detect the possible presence of a spectral line corresponding to the combustion of dihydrogen and to transmit a warning signal to a signalling system of the apparatus in the event that such a spectral line is detected.

9. Apparatus (100) according to Claim 8, wherein the at least one optical sensor is connected to at least one optical fibre.

10. Apparatus (100) according to Claim 9, wherein the at least one optical fibre is parallel to the first electrical conductor (4) or to the second electrical conductor (6).

11. Apparatus (100) according to any one of the preceding claims, wherein the at least one controller (200) is connected to at least one thermal sensor and the at least one controller (200) is configured to receive a signal originating from the at least one thermal sensor, to analyse this signal so as to detect a possible temperature rise due to the combustion of dihydrogen and to transmit a warning signal to a signalling system of the apparatus in the event that such a temperature rise is detected.

12. Apparatus (100) according to Claim 11, combined with one of Claims 9 and 10, wherein the at least one optical fibre is used both for the at least one optical sensor and for the at least one thermal sensor.

13. Apparatus (100) according to any one of the preceding claims, further comprising an additional device for regulating dihydrogen using a material which catalyses an oxidization reaction of dihydrogen with the surrounding air.

14. Apparatus (100) according to the preceding claim, wherein the catalytic material is applied to an electrical conductor and/or an optical fibre and/or a spacer of the device (1) for regulating the concentration of dihydrogen.

15. Apparatus (100) according to any one of the preceding claims, wherein the at least one controller (200) is configured to operate in two operating modes:
- a first mode, referred to as monitoring mode, in which the at least one controller (200) monitors for the presence of dihydrogen in the device (1) as long as the presence of dihydrogen is not detected, and in which the at least one controller (200) commands the application of the predetermined voltage difference between the first electrical conductor (4) and the second electrical conductor (6) of a pair (2) of conductors with a first time interval between two successive applications of the predetermined voltage difference; and
- a second operating mode, when the presence of dihydrogen in the device (1) is detected, such that, when the at least one controller (200) detects a concentration of dihydrogen at least in one region of the device (1), said region corresponding to this pair of conductors, the controller (200) commands the application of the predetermined voltage difference between the first electrical conductor (4) and the second electrical conductor (6) of the pair (2) of electrical conductors with a second time interval between two successive applications of the predetermined voltage difference, the second time interval being shorter than the first time interval.
